# NEUE EUROPÄISCHE PATENTSCHRIFT

(11) **EP 2 739 881 B2**
(45) Veröffentlichungstag und Bekanntmachung des Hinweises auf die Entscheidung über den Einspruch: **01.03.2023**
(45) Hinweis auf die Patenterteilung: 27.04.2016
(21) Anmeldenummer: 12738043.4
(22) Anmeldetag: 19.07.2012
(51) Int. Cl.: F16H 55/12

(54) **ZAHNRAD MIT SCHRÄGVERZAHNUNG UND SEGMENT FÜR EIN ZAHNRAD**
GEAR HAVING HELICAL GEARING AND SEGMENT FOR A GEAR
ROUE DENTÉE À DENTURE OBLIQUE ET SEGMENT POUR UNE ROUE DENTÉE

(30) Priorität: 05.08.2011 DE 102011109533; 09.10.2011 CN 201120379988 U
(43) Veröffentlichungstag der Anmeldung: 11.06.2014
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2012/003038
(87) Internationale Veröffentlichungsnummer: WO 2013/020639

(56) Entgegenhaltungen:
- WO-A1-2010/060505
- CN-Y- 201 344 244
- DE-A1-102008 054 189
- Zeichnung 222.92.42- 780 988 Version "C"
- Auftragsbestätigung vom 25.5.1992
- Montagebericht vom 29.1.1993
- SAP-Liste der DMS Projekte
- SAP Kopfdaten des Lieferauftrags DOOO142
- SAP-Übersicht des Lieferauftrags D000142
- SAP-Grunddaten (Konstruktionszeichnung)
- Zeichnung 20011104
- Reisebericht (Inbetriebnahmebericht) vom 26.02.2008
- Inbetriebnahmemeldung vom 12.1.2008
- Leistungsbescheinigung der Mühle (Mill Acceptance Certificate) vom 28.5.2008
- Falk, Ring gears, Quality assurance brochure, October 1994, eingereicht am 16.05.2018 durch die Einsprechende
- Zeichnung 222.92.42- 780 988 Version "O"
- Zeichnung 222.92.42- 780 988 Version "A"
- Zeichnung 222.92.42- 780 988 Version "B"

## Beschreibung

Die Erfindung betrifft ein Zahnrad mit Schrägverzahnung und ein Segment für ein Zahnrad.

Es ist bekannt, Zahnräder mit einer Außenverzahnung zu versehen.

Aus der DE 10 2008 054 189 A1 ist als nächstkommender Stand der Technik ein Trommelantrieb mit einem segmentierten geradverzahnten Zahnrad bekannt.

Aus der WO 2010/060505 A1 ist ein segmentiertes geradverzahntes Zahnrad für einen Trommelantrieb bekannt.

Aus der CN 201 344 244 Y ist ebenfalls ein geradverzahntes Zahnrad bekannt, das aus Segmenten zusammengesetzt ist.

Der Erfindung liegt daher die Aufgabe zugrunde, die Geräuschbildung bei im Eingriff stehenden Verzahnungen zu vermindern.

Erfindungsgemäß wird die Aufgabe bei dem Zahnrad nach den in Anspruch 1 angegebenen Merkmalen gelöst.

Wichtige Merkmale der Erfindung bei dem Zahnrad mit Schrägverzahnung, welches aus Segmenten zusammengesetzt ist,
wobei jedes Segment einen Verzahnungsabschnitt aufweist, der eine Schrägverzahnung aufweist,
wobei der Verzahnungsabschnitt mit einem Halteabschnitt verbunden ist.

Von Vorteil ist dabei, dass mittels der Schrägverzahnung mit einem in Eingriff stehenden Verzahnungsteil Drehmoment geräuscharm übertragbar ist, obwohl das Zahnrad aus Segmenten zusammengesetzt ist.

Denn bei einem segmentierten Zahnrad nach Stand der Technik ist das Zahnrad in Umfangsrichtung aus Segmenten zusammengesetzt, wobei jedes Segment einen Umfangsabschnitt, also einen Umfangswinkelberiech des Zahnrades darstellt. Das Segment ist sozusagen mittels einer Schnittebene herausgeschnitten aus dem Zahnrad, welche sich in axialer und in von der Zahnradachse aus radialer Richtung erstreckt. Somit ist die Verzahnung als Geradverzahnung auszuführen, da ansonsten Zähne angeschnitten wären und somit Zahnbruchgefahr bestehen würde.

Bei der Erfindung hingegen wird eine Schrägverzahnung auf einem Verzahnungsabschnitt vorgesehen. Der Verzahnungsabschnitt ist entlang einer Zahnlücke abgeschnitten oder begrenzt. Auf diese Weise ist ein geräuscharmer Betrieb des Zahnrades ermöglicht, wobei allerdings der Verzahnungsabschnitt eine Grenzfläche hat, welche mit einem Schrägungswinkel gemäß dem Schrägungswinkel der Verzahnung verläuft. Erfindungsgemäß werden solche Grenzflächen benachbarter Segmente beabstandet, also ohne Kraftübertragung ausgeführt und die Verbindung beziehungsweise der zugehörige Kraftfluss nur im Bereich der Verbindungsflächen ausgeführt, die an den Halteabschnitten angeordnet sind.

Die Halteabschnitte sind aber mit einer Schnittebene begrenzt, die ausschließlich radial und axial verläuft, also nicht in Umfangsrichtung. Entsprechend sind die Verbindungsflächen ausgeführt. Diese erstrecken sich also nur in radialer und axialer Richtung.

Erfindungsgemäß sind Verzahnungsabschnitt und Halteabschnitt einstückig ausgeführt. Von Vorteil ist dabei, dass das Segment eine hohe Belastbarkeit aufweist und in einer Aufspannung bearbeitbar ist und somit die relative Beabstandung der Bohrlöcher auch zur Verzahnung sehr präzise herstellbar ist.

Bei einer vorteilhaften Ausgestaltung ist die Verzahnung eine Außenverzahnung. Von Vorteil ist dabei, dass die Herstellung einfach ausführbar ist.

Erfindungsgemäß weist der Verzahnungsabschnitt an seinen in Umfangsrichtung angeordneten Endbereichen jeweils eine zum benachbarten Segment zugewandte erste Grenzfläche auf, welche parallel zu einer Zahnlücke der Verzahnung verläuft,
insbesondere wobei die erste Grenzfläche sich in radialer Richtung und entlang einer Schraubenlinie, deren Schraubenachse die Zahnradachse ist und deren Schrägungswinkel dem Schrägungswinkel der Verzahnung entspricht, erstreckt. Von Vorteil ist dabei, dass eine Schrägverzahnung im Verzahnungsabschnitt vorsehbar ist, welche ohne unterbrochene Zähne verläuft und somit sehr belastbar ist.

Erfindungsgemäß ragt der Verzahnungsabschnitt, insbesondere mit einem einen Abschnitt der ersten Grenzfläche enthaltenden Abschnitt, in Umfangsrichtung über den Halteabschnitt heraus,
insbesondere wobei der Verzahnungsabschnitt, insbesondere mit einem einen anderen Abschnitt der ersten Grenzfläche enthaltenden anderen Abschnitt, in Umfangsrichtung weniger weit sich erstreckt als der Halteabschnitt. Von Vorteil ist dabei, dass der Halteabschnitt in seinem in Umfangsrichtung liegenden Endbereich anders geschnitten beziehungsweise begrenzt ist als der Verzahnungsbereich. Denn der Halteabschnitt ist an einer Umfangsposition begrenzt, erstreckt sich also mit seiner Endfläche hier nur in radialer und axialer Richtung; der Verzahnungsabschnitt jedoch ist gemäß einer Schrägverzahnung beschränkt, erstreckt sich also gemäß einer Schraubenlinie und radial von der Zahnradachse aus.

Erfindungsgemäß ist zwischen den ersten Grenzflächen zweier benachbarter Segmente ein erster Abstand ausgeführt. Von Vorteil ist dabei, dass keine direkte Kraftübertragung zwischen den Verzahnungsabschnitten zweier benachbarter Segmente stattfindet.

Erfindungsgemäß weist der Halteabschnitt eine Verbindungsfläche auf, an der die entsprechende Verbindungsfläche des jeweils benachbarten Segments angedrückt wird mittels Verbindungsschrauben. Von Vorteil ist dabei, dass die Kraftübertragung zwischen den Halteabschnitten ausgeführt wird und hierbei an einer Umfangsposition die Verbindungsflächen sich berühren und aneinander drückbar sind von den Verbindungsschrauben zur Kraftübertragung.

Bei einer vorteilhaften Ausgestaltung erstreckt die Verbindungsfläche sich in radialer Richtung und in axialer Richtung, insbesondere nicht aber in Umfangsrichtung, insbesondere also an einer einzigen Umfangsposition angeordnet ist. Von Vorteil ist dabei, dass die Verbindungsfläche einfach und kostengünstig herstellbar ist.

Bei einer vorteilhaften Ausgestaltung sind die Halteabschnitte zweier jeweils benachbarter Segmente mittels mindestens zwei Verbindungsschrauben schraubverbunden, wobei eine Schraube zum Ausrichten der Segmente zueinander vorgesehen ist,
insbesondere wobei die Verbindungsfläche ein Bohrloch aufweist, durch welche die Schraube zum Ausrichten hindurchgeführt ist. Von Vorteil ist dabei, dass ein exaktes Ausrichten und dann ein nachfolgendes Anziehen der Schrauben ermöglicht ist. Somit ist die Kraftübertragung zwischen den Halteabschnitten und nicht zwischen den Verzahnungsabschnitten ermöglicht.

Bei einer vorteilhaften Ausgestaltung ist der Halteabschnitt in einem geringeren Radialabstandsbereich angeordnet als der Verzahnungsabschnitt. Von Vorteil ist dabei, dass der Halteabschnitt den radial aufgesetzten Verzahnungsabschnitt trägt und die Verbindungsschrauben zwischen Halteabschnitten die Verzahnung des Zahnrades nicht durchbrechen oder andersweitig behindern, da sie auch auf kleinerem Radialabstand angeordnet sind als der Verzahnungsabschnitt.

Bei einer vorteilhaften Ausgestaltung weist der Halteabschnitt einen Verbindungsabschnitt zum Verbinden mit einer Trommel oder Welle auf, wobei das Zahnrad auf größerem Radialabstand als die Trommel beziehungsweise Welle angeordnet ist. Von Vorteil ist dabei, dass eine Trommel an ihrem Außenumfangs mit einem großen Zahnrad versehbar ist, so dass ein großes Drehmoment übertragbar ist.

Erfindungsgemäß weist der Halteabschnitt eine zweite Grenzfläche auf, welche in Umfangsrichtung und in axialer Richtung sich erstreckt und der radialen Innenseite des in Umfangsrichtung über den zugehörigen Halteabschnitt herausragenden Abschnitts des Verzahnungsabschnitts des benachbarten Segments radial gegenübersteht,
wobei ein zweiter Abstand zwischen der zweiten Grenzfläche und der Innenseite des herausragenden Abschnitts vorgesehen ist. Von Vorteil ist dabei, dass keine Kraftübertragung zwischen benachbarten Verzahnungsabschnitten ausgeführt wird.

Erfindungsgemäß ist der Quotient aus dem ersten Abstand und dem Außendurchmesser des Zahnrades kleiner als 0,0005, insbesondere kleiner als 0,00025 oder sogar kleiner als 0,000125,
und/oder dass
der Quotient aus dem zweiten Abstand und dem Außendurchmesser des Zahnrades kleiner ist als 0,0005, insbesondere kleiner als 0,00025 oder sogar kleiner als 0,000125, ist. Von Vorteil ist dabei, dass im Rahmen der Fertigungstoleranzen und thermisch bedingten Ausdehnungen eine Kraftübertragung sicher verhinderbar ist und trotz der Abstände ein geräuscharmer Betrieb ermöglicht ist. Denn die Abstände sind außerhalb des Eingriffsbereichs der Zähne, da der durch die Abstände erzeugte Schlitz der Zahnlücke, insbesondere also dem Boden der Zahnlücke, entlang verläuft.

Erfindungsgemäß weist der Halteabschnitt zwei Speichenabschnitte auf, welche mittels eines sich in Umfangsrichtung erstreckenden Rippenabschnittes verbunden ist,
wobei die Speichenabschnitte in den in Umfangsrichtung liegenden Endbereichen des Halteabschnitts angeordnet sind und jeweils eine Verbindungsfläche aufweisen,
wobei sich die Speichenabschnitte im Wesentlichen in radialer Richtung und in axialer Richtung erstrecken,
wobei der Rippenabschnitt sich im Wesentlichen in radialer Richtung und in Umfangsrichtung erstreckt,
wobei der Rippenabschnitt zumindest eine Ausnehmung aufweist. Von Vorteil ist dabei, dass eine hohe Stabilität mit geringer Masse erreichbar ist.

Erfindungsgemäß ist das Segment aus ADI gefertigt.

Von Vorteil ist dabei, dass die Verzahnung hoch belastbar ist. Denn ADI ist ein Werkstoff auf Basis von Gusseisen mit Kugelgraphit. Durch eine besondere Wärmebehandlung werden eine hohe Festigkeit bei guter Dehnung, ein hoher Verschleißwiderstand bei gleich bleibend guter Dämpfung erreicht.

Der herausragende, also den Halteabschnitt in Umfangsrichtung überragende Bereich des Verzahnungsabschnitts ist somit belastbar, da ADI eine hohe Festigkeit aufweist. Die Verzahnung in diesem Bereich wird also hoch belastbar, obwohl der Bereich herauskragt.

Weitere Vorteile ergeben sich aus den Unteransprüchen.

Die Erfindung wird nun anhand von Abbildungen näher erläutert:

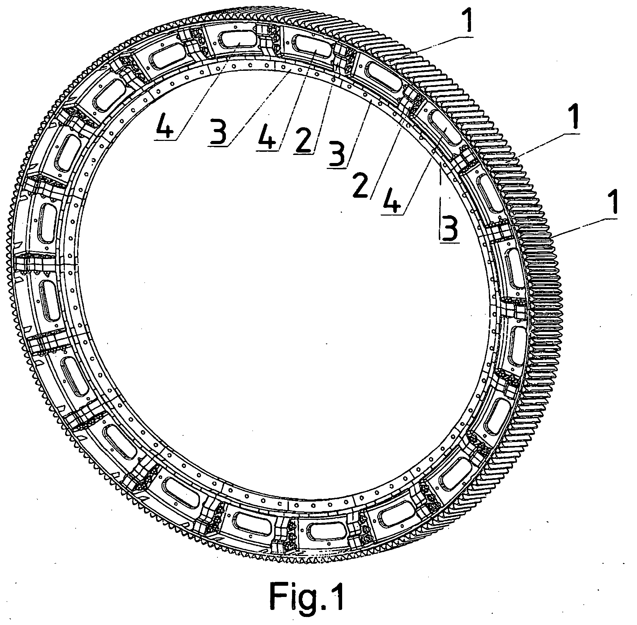

In der Figur 1 ist ein schrägverzahntes Zahnrad gezeigt, welches aus in Umfangsrichtung hintereinander angeordneten Segmenten zusammengesetzt ist.

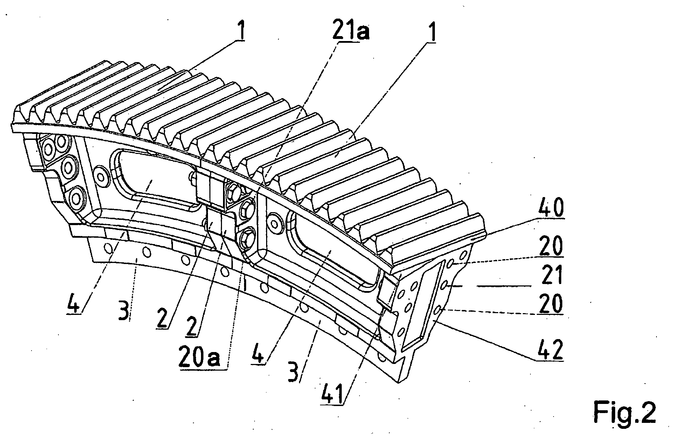

In der Figur 2 ist ein vergrößerter Ausschnitt hierzu gezeigt.

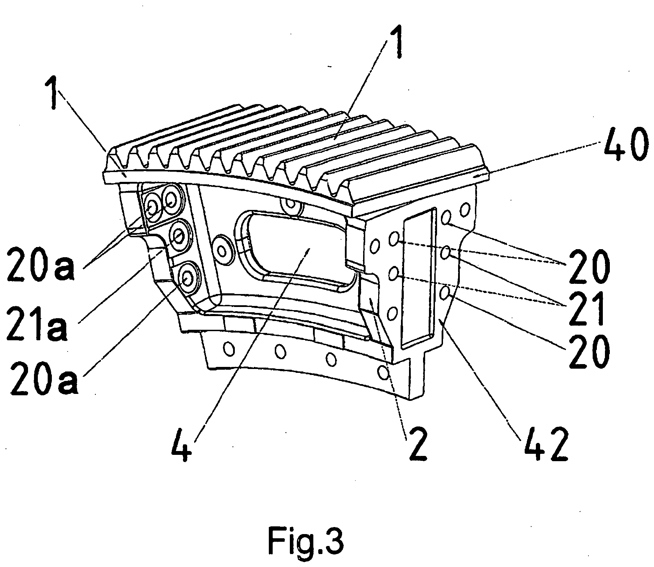

In der Figur 3 ist ein ähnliches Segment gezeigt, wobei solche Segmente wiederum zu einem ähnlichen Zahnrad zusammensetzbar sind. Dabei werden im Unterschied zur Figur 1 und 2 vier statt drei Schrauben im Verbindungsbereich zweier benachbarter Segmente verwendet.

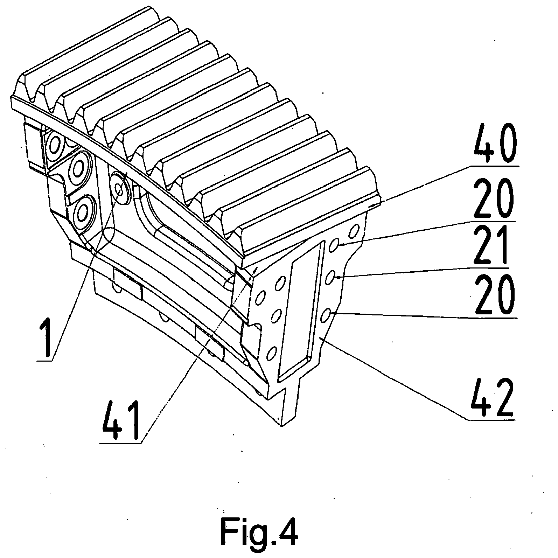

In der Figur 4 ist ein vergrößerter Ausschnitt zur Figur 3 gezeigt. Dabei sind drei Grenzflächen sichtbar, die an ein jeweils zu verbindendes benachbartes Segment angrenzen.

Jedes Segment weist einen Verzahnungsabschnitt 1 auf, welcher als mit einer Außenverzahnung versehener Zylindermantelabschnitt ausgebildet ist.

Da in Umfangsrichtung zum Zusammensetzen des Zahnrades 14 Segmente verwendet werden, ähneln die Verzahnungsabschnitte 1 Zahnstangensegmenten, wobei die Stange entsprechend der Mantelfläche eines dem Zahnrad entsprechenden Zylinders gekrümmt ausgeführt ist.

Die Verzahnungsabschnitte 1 sind also herstellbar, indem ein Mantelabschnitt eines Hohlzylinders gefertigt wird und in seine Außenseite eine Verzahnung eingearbeitet wird. Dabei ist der Mantelabschnitt in axialer Richtung durch zwei Ebenen, insbesondere also Stirnflächenabschnitte des Zahnrades, begrenzt, deren Normale in Achsrichtung des Zahnrades verläuft. Außerdem ist der Verzahnungsabschnitt in Umfangsrichtung begrenzt durch eine schraubenartige Fläche, die alle radial von der Zahnradachse zu einer Schraubenlinie hin verlaufenden Strahlen enthält.

An der radialen Innenseite des Segments sind jeweils Halteabschnitte ausgebildet, die einen in axialer Richtung, also Zahnradachsrichtung, sich erstreckenden Verbindungsabschnitt 2 und sich in Umfangsrichtung erstreckenden Verbindungsabschnitt mit einem ebenfalls in Umfangsrichtung sich erstreckenden Verbindungsabschnitt 3 für das Befestigen auf der Außenfläche einer Trommel, umfassen.

Somit weist der Verbindungsabschnitt 2 eine Verbindungsfläche 42 auf, an welche das benachbarte Segment mit seiner entsprechenden Verbindungsfläche 42 angeschraubt wird. Die Verbindungsfläche 42 erstreckt ich in radiale und in axiale Richtung. Somit befindet sich die gesamte Verbindungsfläche 42 an einer einzigen Position in Umfangsrichtung, also an einer Umfangswinkelposition.

In der Verbindungsfläche sind in Umfangsrichtung orientierte Bohrlöcher angeordnet. Dabei sind Bohrlöcher 20 zum Einbringen von Schrauben vorgesehen, mit welchen die jeweils benachbarten Segmente aneinander gedrückt werden. Außerdem ist auch mindestens ein Bohrloch 21 zum Einbringen einer Schraube 21a zum relativen Ausrichten der Segmente zueinander vorgesehen. Somit ist vor dem festen Anziehen der Verbindungsschrauben 20a ein Ausrichten der Segmente ermöglicht. Nach Durchführung des Ausrichtens werden die Verbindungsschrauben 20a fest angeschraubt und somit die relative Lage der Segmente fixiert.

Der Verzahnungsabschnitt 1 weist an seiner radial außen sich befindenden Seite eine Verzahnung auf. Dabei ist die Verzahnung als Schrägverzahnung ausgeführt. Die Grenzfläche 40, mit welcher der Verzahnungsabschnitt 1 des Segments an den entsprechend benachbarten angrenzt, ist entlang einer Lücke der Verzahnung ausgeführt. Somit ist keiner der Zähne angeschnitten durch die Grenzfläche 40. Die Grenzfläche 40 erstreckt sich somit entsprechend der Schrägverzahnung, also eines Schraubenlinienabschnitts, und in radialer Richtung.

Da die Halteabschnitte aber in rein radialer und axialer Richtungen (das heißt, die Speichenabschnitte 2) orientiert sind oder rein in radialer Richtung und in Umfangsrichtung (das heißt, die Rippenabschnitte 3) orientiert sind, ragt der Verzahnungsabschnitt 1 abschnittsweise über den Halteabschnitt heraus. Somit ragt der Verzahnungsabschnitt 1 zumindest in einem ersten axialen Bereich über die Verbindungsfläche 42 in Umfangsrichtung heraus; in einem zweiten axialen Bereich ist der Verzahnungsabschnitt 1 in Umfangsrichtung zurückgezogen, so dass die Grenzfläche 41 sichtbar ist. Dabei erstreckt sich die Grenzfläche 41 in axialer Richtung und in Umfangsrichtung; also weist sie eine einzigen Radialabstand auf.

Die Segmente sind dabei derart toleriert und ausgeführt, dass zwei benachbarte Segmente sich an ihren Verbindungsflächen 42 berühren, jedoch ein Abstand im Bereich der Grenzflächen 40 und 41 vorhanden ist. Hierbei wird bevorzugt ein Abstand von weniger als 1 mm, insbesondere von weniger als 0,5 mm eingehalten bei einem Außendurchmesser des aus den Segmenten zusammengesetzten Zahnrades von mehr als 2 Meter, insbesondere, von mehr als 4 Meter. Somit ist der Quotient aus Abstand und Außendurchmesser kleiner als 0,0005, insbesondere kleiner als 0,00025 oder sogar 0,000125.

Auf diese Weise sind auch thermisch bedingte und/oder montagebedingte Abstandsänderungen tolerierbar. Denn die kraftübertragende Verbindungsfläche 42 übernimmt vollständig die zwischen den benachbarten Segmenten durchzuleitenden Kräfte.

Der überragende Teil des Verzahnungsabschnittes deckt die Grenzfläche 41 des benachbarten Segments ab, insbesondere in radialer Richtung.

Ebenso liegen die Grenzflächen 40 jeweils zweier benachbarter Segmente sich in Umfangsrichtung und auch in axialer Richtung gesehen gegenüber.

### Bezugszeichenliste

1 Verzahnungsabschnitt
2 Verbindungsabschnitt
3 Verbindungsabschnitt für Trommel
4 Ausnehmung
20, 21 Bohrloch
20a Verbindungsschraube
21a Schraube für Ausrichten
40 Grenzfläche
41 Grenzfläche
42 Verbindungsfläche

## Patentansprüche

1. Zahnrad mit Schrägverzahnung, welches aus Segmenten zusammengesetzt ist,
wobei jedes Segment einen Verzahnungsabschnitt aufweist, der eine Schrägverzahnung aufweist,
wobei der Verzahnungsabschnitt mit einem Halteabschnitt verbunden ist,
wobei der Verzahnungsabschnitt an seinen in Umfangsrichtung angeordneten Endbereichen jeweils eine zum benachbarten Segment zugewandte erste Grenzfläche (40) aufweist, welche parallel zu einer Zahnlücke der Verzahnung verläuft,
wobei der Verzahnungsabschnitt und Halteabschnitt einstückig ausgeführt sind,
wobei der Verzahnungsabschnitt, insbesondere mit einem einen Abschnitt der ersten Grenzfläche (40) enthaltenden Abschnitt, in Umfangsrichtung über den Halteabschnitt herausragt,
wobei der Verzahnungsabschnitt, insbesondere mit einem einen anderen Abschnitt der ersten Grenzfläche (40) enthaltenden anderen Abschnitt, in Umfangsrichtung weniger weit sich erstreckt als der Halteabschnitt,
wobei zwischen den ersten Grenzflächen (40) zweier benachbarter Segmente ein erster Abstand ausgeführt ist.
wobei der Halteabschnitt eine Verbindungsfläche aufweist, an der die entsprechende Verbindungsfläche des jeweils benachbarten Segments angedrückt wird mittels Verbindungsschrauben,
wobei der Halteabschnitt eine zweite Grenzfläche (41) aufweist, welche in Umfangsrichtung und in axialer Richtung sich erstreckt und der radialen Innenseite des in Umfangsrichtung über den zugehörigen Halteabschnitt herausragenden Abschnitts des Verzahnungsabschnitts des benachbarten Segments radial gegenübersteht,
wobei ein zweiter Abstand zwischen der zweiten Grenzfläche (41) und der Innenseite des herausragenden Abschnitts vorgesehen ist,
wobei der Halteabschnitt zwei Speichenabschnitte aufweist, welche mittels eines sich in Umfangsrichtung erstreckenden Rippenabschnittes verbunden ist,
wobei die Speichenabschnitte in den in Umfangsrichtung liegenden Endbereichen des Halteabschnitts angeordnet sind und jeweils eine Verbindungsfläche aufweisen,
wobei die Speichenabschnitte sich im Wesentlichen in radialer Richtung und in axialer Richtung erstrecken,
wobei der Rippenabschnitt sich im Wesentlichen in radialer Richtung und in Umfangsrichtung erstreckt,
wobei der Rippenabschnitt zumindest eine Ausnehmung aufweist,
wobei der Quotient aus dem ersten Abstand und dem Außendurchmesser des Zahnrades kleiner als 0,0005, insbesondere kleiner als 0,00025 oder sogar kleiner als 0,000125, ist,
wobei das Segment aus ADI-Stahlguss gefertigt ist.

2. Zahnrad nach Anspruch 1,
**dadurch gekennzeichnet, dass**
die Verzahnung eine Außenverzahnung ist.

3. Zahnrad nach mindestens einem der vorangegangenen Ansprüche,
**dadurch gekennzeichnet, dass**
die erste Grenzfläche (40) sich in radialer Richtung und entlang einer Schraubenlinie, deren Schraubenachse die Zahnradachse ist und deren Schrägungswinkel dem Schrägungswinkel der Verzahnung entspricht, erstreckt.

4. Zahnrad nach mindestens einem der vorangegangenen Ansprüche,
**dadurch gekennzeichnet, dass**
die Verbindungsfläche sich in radialer Richtung und in axialer Richtung erstreckt, insbesondere nicht aber in Umfangsrichtung, insbesondere also an einer einzigen Umfangsposition angeordnet ist.

5. Zahnrad nach mindestens einem der vorangegangenen Ansprüche,
**dadurch gekennzeichnet, dass**
die Halteabschnitte zweier jeweils benachbarter Segmente mittels mindestens zwei Verbindungsschrauben schraubverbunden sind, wobei eine Schraube zum Ausrichten der Segmente zueinander vorgesehen ist,
insbesondere wobei die Verbindungsfläche ein Bohrloch aufweist, durch welche die Schraube zum Ausrichten hindurchgeführt ist.

6. Zahnrad nach mindestens einem der vorangegangenen Ansprüche,
**dadurch gekennzeichnet, dass**
der Halteabschnitt in einem geringeren Radialabstandsbereich angeordnet ist als der Verzahnungsabschnitt.

7. Zahnrad nach mindestens einem der vorangegangenen Ansprüche,
**dadurch gekennzeichnet, dass**
der Halteabschnitt einen Verbindungsabschnitt zum Verbinden mit einer Trommel oder Welle aufweist, wobei das Zahnrad auf größerem Radialabstand als die Trommel beziehungsweise Welle angeordnet ist.

## Claims

1. A gear wheel with helical toothing, which gear wheel is composed of segments,
wherein each segment has a toothing portion which has helical toothing,
wherein the toothing portion is connected to a holding portion,
wherein the toothing portion, at its end regions which are arranged in the circumferential direction, has in each case a first boundary surface (40) facing the adjacent segment, which boundary surface runs parallel to a tooth space of the toothing,
wherein the toothing portion and holding portion are formed in one piece,
wherein the toothing portion, in particular with a portion containing a portion of the first boundary surface (40), projects beyond the holding portion in the circumferential direction,
wherein the toothing portion, in particular with another portion containing another portion of the first boundary surface (40), extends less far in the circumferential direction than the holding portion,
wherein a first distance is formed between the first boundary surfaces (40) of two adjacent segments,
wherein the holding portion has a connecting face against which the corresponding connecting face of the adjacent segment in each case is pressed by means of connecting screws,
wherein the holding portion has a second boundary surface (41) which extends in the circumferential direction and in the axial direction and is located radially opposite the radial inner side of that portion of the toothing portion of the adjacent segment which projects beyond the associated holding portion in the circumferential direction,
wherein a second distance is provided between the second boundary surface (41) and the inner side of the projecting portion,
wherein the holding portion has two spoke portions which is [sic] connected by means of a rib portion extending in the circumferential direction,
wherein the spoke portions are arranged in the end regions of the holding portion which lie in the circumferential direction, and have a connecting face in each case,
wherein the spoke portions extend substantially in the radial direction and in the axial direction,
wherein the rib portion extends substantially in the radial direction and in the circumferential direction,
wherein the rib portion has at least one cutout,
wherein the quotient of the first distance and the external diameter of the gear wheel is less than 0.0005, in particular less than 0.00025 or even less than 0.000125,
wherein the segment is manufactured from ADI cast steel.

2. A gear wheel according to Claim 1,
**characterised in that**
the toothing is external toothing.

3. A gear wheel according to at least one of the preceding claims,
**characterised in that**
the first boundary surface (40) extends in the radial direction and along a helical line, the helix axis of which is the gear wheel axis and the helix angle of which corresponds to the helix angle of the toothing.

4. A gear wheel according to at least one of the preceding claims,
**characterised in that**
the connecting face extends in the radial direction and in the axial direction, but in particular not in the circumferential direction, in particular therefore is arranged at a single circumferential position.

5. A gear wheel according to at least one of the preceding claims,
**characterised in that**
the holding portions of two adjacent segments in each case are screw-connected by means of at least two connecting screws, one screw being provided to align the segments relative to one another,
in particular with the connecting face having a drill hole through which the screw is guided for alignment purposes.

6. A gear wheel according to at least one of the preceding claims,
**characterised in that**
the holding portion is arranged in a smaller radial distance region than the toothing portion.

7. A gear wheel according to at least one of the preceding claims,
**characterised in that**
the holding portion has a connecting portion for connecting to a drum or shaft, the gear wheel being arranged at a greater radial distance than the drum or shaft.

## Revendications

1. Roue dentée à denture oblique, composée de segments,
chaque segment présentant une zone dentée munie d'une denture oblique,
laquelle zone dentée est reliée à une zone de retenue,
ladite zone dentée comportant respectivement, au niveau de ses régions extrêmes disposées dans la direction du pourtour, une première surface de délimitation (40) tournée vers le segment voisin et s'étendant parallèlement à un entredent de la denture,
ladite zone dentée et ladite zone de retenue étant réalisées d'un seul tenant,
sachant que la zone dentée fait saillie au-delà de la zone de retenue dans la direction du pourtour, notamment par un tronçon renfermant un tronçon de la première surface de délimitation (40),
sachant que l'étendue de ladite zone dentée est moindre que celle de ladite zone de retenue dans la direction du pourtour, notamment par un autre tronçon renfermant un autre tronçon de ladite première surface de délimitation (40),
un premier espacement étant réservé entre les premières surfaces de délimitation (40) de deux segments voisins,
ladite zone de retenue étant dotée d'une surface de liaison, contre laquelle la surface de liaison correspondante du segment respectivement voisin est pressée au moyen de vis de solidarisation,
sachant que ladite zone de retenue est pourvue d'une seconde surface de délimitation (41) qui s'étend dans la direction du pourtour et dans la direction axiale, et se trouve radialement en vis-à-vis de la face intérieure radiale du tronçon de la zone dentée du segment voisin, en saillie au-delà de la zone de retenue associée dans ladite direction du pourtour,
un second espacement étant prévu entre ladite seconde surface de délimitation (41) et ladite face intérieure dudit tronçon en saillie,
ladite zone de retenue étant nantie de deux tronçons à rayons, reliés au moyen d'un tronçon nervuré qui s'étend dans la direction du pourtour,
lesquels tronçons à rayons sont disposés dans les régions extrêmes de ladite zone de retenue situées dans la direction du pourtour, et sont respectivement munis d'une surface de liaison,
lesdits tronçons à rayons s'étendant, pour l'essentiel, dans la direction radiale et dans la direction axiale,
ledit tronçon nervuré s'étendant, pour l'est5952
sentiel, dans la direction radiale et dans la direction du pourtour,
lequel tronçon nervuré présente au moins un évidement,
le quotient du premier espacement et du diamètre extérieur de ladite roue dentée étant inférieur à 0,0005, notamment inférieur à 0,00025, voire même inférieur à 0,000125,
le segment étant fabriqué en fonte d'acier ADI.

2. Roue dentée selon la revendication 1,
**caractérisée par le fait que**
la denture est une denture extérieure.

3. Roue dentée selon au moins l'une des revendications précédentes,
**caractérisée par le fait que**
la première surface de délimitation (40) s'étend dans la direction radiale et le long d'une ligne hélicoïdale dont l'axe de l'hélice est l'axe de ladite roue dentée, et dont l'angle d'obliquité correspond à l'angle d'obliquité de la denture.

4. Roue dentée selon au moins l'une des revendications précédentes,
**caractérisée par le fait que**
la surface de liaison s'étend dans la direction radiale et dans la direction axiale,
mais toutefois pas dans la direction du pourtour, en particulier, c'est-à-dire qu'elle occupe notamment un unique emplacement dudit pourtour.

5. Roue dentée selon au moins l'une des revendications précédentes,
**caractérisée par le fait que**
les zones de retenue de deux segments respectivement voisins sont solidarisées par vissage à l'aide d'au moins deux vis de solidarisation, une vis étant prévue pour l'alignement mutuel desdits segments,
sachant notamment que la surface de liaison comporte un trou foré à travers lequel ladite vis est introduite, en vue de l'alignement.

6. Roue dentée selon au moins l'une des revendications précédentes,
**caractérisée par le fait que**
la zone de retenue se trouve dans une plage d'espacements radiaux moindre que celle de la zone dentée.

7. Roue dentée selon au moins l'une des revendications précédentes,
**caractérisée par le fait que**
la zone de retenue est pourvue d'un tronçon de solidarisation affecté à la liaison avec un tambour ou un arbre, ladite roue dentée étant située à un plus grand espacement radial respectif que ledit tambour, ou que ledit arbre.
